# NEUE EUROPÄISCHE PATENTSCHRIFT

(11) **EP 2 470 809 B2**
(45) Veröffentlichungstag und Bekanntmachung des Hinweises auf die Entscheidung über den Einspruch: **11.05.2022**
(45) Hinweis auf die Patenterteilung: 18.03.2015
(21) Anmeldenummer: 10750044.9
(22) Anmeldetag: 23.08.2010
(51) Int. Cl.: F16F 9/46

(54) **KRAFTFAHRZEUGSTOSSDÄMPFER**
MOTOR VEHICLE SHOCK ABSORBER
AMORTISSEUR DE VÉHICULE AUTOMOBILE

(30) Priorität: 25.08.2009 DE 102009038818
(43) Veröffentlichungstag der Anmeldung: 04.07.2012
(73) Patentinhaber: ThyssenKrupp Bilstein GmbH, 58256 Ennepetal (DE)
(72) Erfinder: GÖTZ, Ole, 38112 Braunschweig (DE); HAMERS, Wolfgang, 52428 Jülich (DE); SCHMIDT, Klaus, 51519 Odenthal (DE); SMELJANSKIJ, Dmitrij, 51373 Leverkusen (DE); WOENARTA, Freddy, 38116 Braunschweig (DE)
(74) Vertreter: Lorenz, Bernd Ingo Thaddeus
(86) Internationale Anmeldenummer: PCT/EP2010/005152
(87) Internationale Veröffentlichungsnummer: WO 2011/023351

(56) Entgegenhaltungen:
- EP-A1- 0 608 427
- DE-A1- 3 518 327
- DE-A1- 4 107 599
- DE-A1- 10 062 999
- DE-A1- 19 836 286
- DE-C1- 4 008 326
- DE-C1- 4 441 047
- DE-C2- 4 016 807
- US-A- 5 690 195

## Beschreibung

Die Erfindung betrifft einen Stoßdämpfer für eine Radaufhängung eines Kraftfahrzeugs. Der erfindungsgemäße Stoßdämpfer umfasst unter anderem ein Schaltventil, mit dem der Stoßdämpfer zwischen einer weichen Dämpfungscharakteristik und einer harten Dämpfungscharakteristik hin und her geschaltet werden kann. Die Erfindung betrifft insbesondere einen derartigen, zwischen zwei unterschiedlich harten Dämpfungsniveaus hin- und herschaltbaren Stoßdämpfer, der für den Einsatz in Dämpferrohren mit kleinem Durchmesser verwendbar ist.

Die Erfindung betrifft außerdem eine Ventilanordnung zur Integration in den Innenraum eines Dämpferrohrs eines Stoßdämpfers, um einen Stoßdämpfer zu erzeugen, der zwischen einer weichen Dämpfungscharakteristik und einer harten Dämpfungscharakteristik hin und her geschaltet werden kann.

Bereits seit langer Zeit gibt es Stoßdämpfer für die Radaufhängung von Kraftfahrzeugen, bei denen die Dämpfkraft verändert werden kann. Hierfür sind aus dem Stand der Technik vielfältige Lösungsvorschläge bekannt. Einerseits werden im Stand der Technik Stoßdämpfer vorgeschlagen, die mit kontinuierlich verstellbaren Ventilen ausgerüstet sind und mit denen die Dämpfkraft des Stoßdämpfers kontinuierlich verändert werden kann. Der Einsatz derartiger kontinuierlich verstellbarer Ventile ist mit einigem technischen Aufwand verbunden, so dass derartige Stoßdämpfer daher vergleichsweise teuer in der Herstellung sind.

Neben den Stoßdämpfern mit kontinuierlich verstellbarer Dämpfkraft sind aus dem Stand der Technik auch solche Stoßdämpfer bekannt, bei denen durch eine bestimmte Anordnung von passiven Dämpfungsventilen im Zusammenhang mit einem Schaltventil unterschiedliche Dämpfungscharakteristiken einstellbar sind. Insbesondere können unterschiedliche Dämpfungscharakteristiken für die Zugstufe und die Druckstufe eingestellt werden. Ein Beispiel für diese Kategorie von Kfz-Stoßdämpfern mit veränderbarer Dämpfkraft ist in der Druckschrift DE 38 03 888 C2 beschrieben.

Aus der Druckschrift DE 35 18 327 A1 ist ein hydraulischer verstellbarer Schwingungsdämpfer mit den Merkmalen des Oberbegriffes des unabhängigen Patentanspruchs 1 bekannt. Bei dem aus dieser Druckschrift bekannten Stoßdämpfer ist ein Dämpfungskolben vorgesehen, der auf einem Zapfen eines an der Kolbenstange angeschraubten Gehäuses angeordnet ist. Dieses Gehäuse ist in der DE 35 18 327 A1 mit dem Begriff "Zwischenhülse" bezeichnet.

Der Dämpfungskolben weist Dämpfungsventile auf, welche mit Strömungskanälen zusammenwirken, die im Körper des Dämpfungskolbens angeordnet sind. Diese Dämpfungsventile sind so ausgelegt, dass sie eine harte Dämpfungscharakteristik aufweisen, das heißt, dass sie bei Durchströmung der Durchflusskanäle mit Dämpfungsflüssigkeit große Dämpfungskräfte erzeugen. Hydraulisch parallel zu dem Dämpfungskolben ist ein Bypass vorgesehen. In dem Bypass ist ein Bypassventil angeordnet. Dieses weist eine weiche Dämpfungscharakteristik auf, das heißt bei Durchströmung des Bypassventils mit Dämpfungsflüssigkeit wird im Vergleich zum Dämpfungskolben nur eine relativ geringe Dämpfungskraft erzeugt.

Das Bypassventil ist in einem Strömungsweg angeordnet, der durch eine Querbohrung in dem Gehäuse, d.h. in dem Mantel der "Zwischenhülse", und eine Längsbohrung in dem den Dämpfungskolben tragenden Zapfen gebildet ist. Im Inneren des Gehäuses ist ein Schaltventil vorgesehen. Das Schaltventil umfasst eine Spule und einen als Magnetanker ausgebildeten Ventilkörper. Wird die Spule nicht bestromt, so sitzt der Ventilkörper auf einer in der DE 35 18 327 A1 nicht mit einem Bezugszeichen versehenen Ventilsitzfläche eines ebenfalls nicht näher bezeichneten, im Querschnitt H-förmigen Bauteils auf. In diesem Zustand ist das Schaltventil geschlossen ("stromlos geschlossen"). Wird die Spule bestromt, so hebt sich der Ventilkörper gegen die Kraft der Rückstellfeder von seiner Sitzfläche ab. Das Dämpfungsmedium kann dann von dem unteren Arbeitsraum des Stoßdämpfers in den oberen Arbeitsraum bzw. in umgekehrter Richtung durch den Bypass strömen. Dabei wird das die weiche Dämpfungscharakteristik aufweisende Bypassventil von der Dämpfungsflüssigkeit durchströmt, so dass der Stoßdämpfer nur vergleichsweise geringe Dämpfungskräfte erzeugt.

Im geschlossenen Zustand des Schaltventils ist der Bypass dagegen verschlossen, so dass das Bypassventil nicht durchströmt wird. Die Dämpfungsflüssigkeit strömt dann durch die Durchflusskanäle im Dämpfungskolben und wirkt mit den am Dämpfungskolben angeordneten Dämpfungsventilen zusammen, welche die harte Dämpfungscharakteristik aufweisen. Durch diese Anordnung wird der sicherheitsrelevanten Forderung nach einer so genannten "Fail Safe-Funktion" Rechnung getragen. "Fail Safe" bedeutet, dass bei plötzlichem Ausfall der elektrischen Stromversorgung des Stoßdämpfers eine harte Dämpfungscharakteristik von dem Dämpfer erzeugt werden muss, um auch bei hohen Geschwindigkeiten und z.B. Kurvenfahrten eine sichere Fahrstabilität zu gewährleisten.

Bei der aus DE 35 18 327 A1 bekannten Konstruktion ist es von Nachteil, dass die darin offenbarte Ventilanordnung nur in eingeschränktem Umfang für den Einsatz in Stoßdämpfern mit geringem Dämpferrohrdurchmesser geeignet ist. Mit Hilfe des die weiche Dämpfungscharakteristik aufweisenden Dämpfungsventils soll eine komfortable Dämpfung erreicht werden, die den Fahrzeuginsassen ein angenehmes Fahrgefühl vermittelt. Daher Bezeichnet der Fachmann dieses Ventil auch als "Komfortventil". Durch die weiche Beplattung des Komfortventils wird der Dämpfungsflüssigkeit weniger Widerstand entgegengesetzt und somit werden kleinere Dämpfungskräfte erzeugt. Um auch bei größeren Dämpfergeschwindigkeiten ausreichend großen Durchflussquerschnitt für die weiche Dämpfungscharakteristik bereitstellen zu können, wird ein möglichst großer Durchmesser des Komfortventils und dessen Ventilscheiben angestrebt. Bei dem in DE 35 18 327 A1 beschriebenen Stoßdämpfer weist das Komfortventil jedoch konstruktionsbedingt nur einen relativ geringen Durchmesser auf. Daher kann dieses Komfortventil zumindest dann, wenn das Dämpferrohr nur einen geringen Durchmesser aufweist, nicht ausreichend groß ausgelegt werden, um auch bei größeren Dämpfergeschwindigkeiten ausreichend Fahrkomfort und Spreizung zwischen der harten und weichen Dämpfungscharakteristik zu bieten. Des Weiteren ist die Lebensdauer von Ventilscheiben mit geringerem Durchmesser deutlich geringer als bei Ventilscheiben mit größerem Durchmesser. Darüber hinaus weist die in der DE 35 18 327 A1 beschriebene Ventilanordnung wegen des im Querschnitt H-förmigen Elementes, auf welchem sich der Magnetanker / der Ventilkörper des Schaltventils dichtend abstützt, eine große axiale Baulänge auf.

Nachteilig beim Gegenstand der DE 35 18 327 A1 ist weiterhin, dass der Dämpfungskolben in axialer Richtung gesehen eine gewisse Mindestbauhöhe aufweisen muss, wenn der Stoßdämpfer in einem McPherson-Federbein eingesetzt werden soll. Denn bei diesen Federbeinen werden die Lenkbewegungen des Fahrzeugs über die Kolbenstange des Stoßdämpfers eingeleitet, so dass die entsprechenden Querkräfte über den Dämpfungskolben auf das Dämpferrohr übertragen werden. Dies kann nicht mehr gewährleistet werden, wenn der Dämpfungskolben die Mindestbauhöhe unterschreitet. Von daher sind bei der DE 35 18 327 A1 die Möglichkeiten eng begrenzt, die axiale Bauhöhe des für die harte Dämpfungskennung zuständigen Dämpfungskolbens zu reduzieren.

In der DE 40 08 326 C1 wird ein hydraulischer, regelbarer Schwingungsdämpfer beschrieben, bei dem mindestens drei unterschiedliche Dämpfkraftniveaus mittels eines elektromagnetisch betätigbaren Ventils eingestellt werden können. Ein Durchflusskanal wird über das elektromagnetische Ventil gesteuert. Der Ventilkörper ist zur Erzeugung von drei unterschiedlichen Dämpfungskraftkennlinien zwischen zwei Endpositionen bewegbar, wobei der Ventilkörper über mindestens zwei Federn abgestützt und zwischen seinen beiden Endpositionen über einen Anschlag und eine Anschlagfläche auf mindestens eine Zwischenposition einstellbar ist. In der jeweiligen Position schaltet der Ventilkörper einen entsprechenden Bypass, so dass abhängig von der Position des Ventilkörpers eine harte Dämpfungscharakteristik, eine weiche Dämpfungscharakteristik und eine dazwischen liegende mittlere Dämpfungscharakteristik eingestellt wird. Die beiden Federn sind der Magnetkraft entgegen gerichtet, so dass im stromlosen Zustand des Elektromagneten beide Federn den Ventilkörper in seine Grundposition bewegen. Nach einer ersten Bestromung des Elektromagneten wird der Ventilkörper gegen die erste Feder bis zu einem Anschlag gebracht, so dass in dieser Position ein Bypass geschaltet wird. Bei einer anschließenden größeren Bestromung des Elektromagneten wird die zweite Feder vorgespannt, so dass der Ventilkörper in seine Endposition gebracht werden kann, wobei in dieser Endposition ein zweiter Bypass freigegeben wird.

Bei der in DE 40 08 326 C1 beschriebenen Lösung ist es erforderlich, den Elektromagneten unterschiedlich stark zu bestromen, um den Ventilkörper zusammen mit einer Ausgangsposition in mindestens drei Positionen schalten zu können. Daher ist entweder eine Steuerung der Stromstärke bei der Bestromung des Elektromagneten erforderlich, oder der Elektromagnet muss - wie im Unteranspruch 8 der DE 40 08 326 C1 beansprucht - mindestens zwei unterschiedliche Magnetspulen aufweisen. Beide vorgenannten Möglichkeiten laufen einer kostengünstigen Stoßdämpferkonstruktion zuwider.

Außerdem ist die konstruktive Ausgestaltung des Schaltventils gemäß DE 40 08 326 C1 wegen der erforderlichen Federn zum Abstützen des Ventilkörpers und wegen des erforderlichen Anschlags und der Anschlagfläche aufwendig und kostenintensiv.

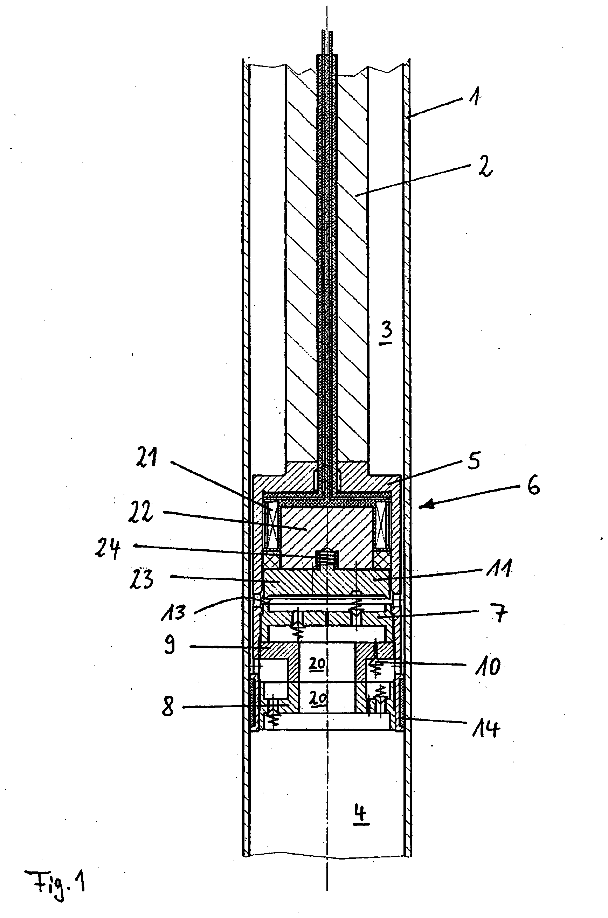

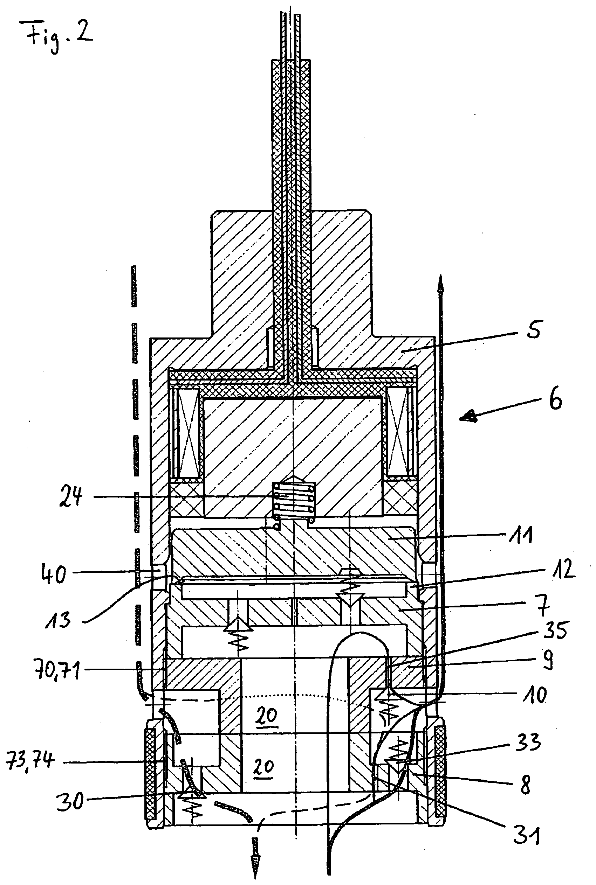

Des Weiteren wird bei der in der DE 40 08 326 C1 offenbarten Lösung die harte Dämpfungscharakteristik nicht auf einfache Weise durch ein einzelnes Dämpfungsventil mit einer harten Dämpfungscharakteristik bereit gestellt, sondern eine sportliche, harte Einstellung des Schwingungsdämpfers wird durch eine aufwendige hydraulische Reihenschaltung der beiden als "Federblätter 16, 17" bezeichneten Ventilscheibenpakete erreicht, vgl. Fig. 1 und 2 sowie Sp. 3 Z. 11 - 14.

Schließlich ist in Bezug auf die in der DE 40 08 326 C1 offenbarte Lösung von Nachteil, dass der Anstieg, d.h. der Gradient der Dämpfungskennlinien im Kraft-Geschwindigkeits-Diagramm im Bereich kleiner Kolbenstangengeschwindigkeiten fest eingestellt ist. Daher erfüllt diese Lösung im Bereich kleiner Kolbenstangengeschwindigkeiten nicht die Anforderung an eine flexible Anpassungsmöglichkeit der Dämpfungskennlinienverläufe an unterschiedliche Kundenanforderungen.

Der Erfindung liegt die Aufgabe zu Grunde einen Stoßdämpfer für eine Radaufhängung eines Kraftfahrzeugs mit zwischen zwei Dämpfungskraftniveaus hin und her schaltbarer Dämpfungskraft zur Verfügung zu stellen, der auch bei geringen Dämpferrohrdurchmessern bei allen Kolbenstangengeschwindigkeiten eine ausreichend weiche Dämpfungscharakteristik erzeugt und bei dem die Dämpfungsventilanordnung eine geringe axiale Baulänge beansprucht.

Insbesondere soll ein kostengünstiger Stoßdämpfer für die Radaufhängung eines Kraftfahrzeugs mit einem kleinen Dämpferrohrdurchmesser zur Verfügung gestellt werden, der trotz seines kleinen Dämpferrohrdurchmessers zwischen einer harten und einer weichen Dämpfungscharakteristik hin und her schaltbar ist.

Diese Aufgabe wird erfindungsgemäß gelöst durch einen Stoßdämpfer mit den Merkmalen des Patentanspruchs 1. Vorteilhafte Weiterbildungen des erfindungsgemäßen Stoßdämpfers sind in den Unteransprüchen angegeben.

Der Erfindung liegt ferner die Aufgabe zu Grunde eine Lösung bereitzustellen, durch welche es insbesondere bei Stoßdämpfern für eine Radaufhängung eines Kraftfahrzeugs mit kleinen Dämpferrohrdurchmessern ermöglicht wird, für jede Bewegungsrichtung der Kolbenstange zwischen zwei Dämpfungskraftniveaus hin und her zu schalten.

Diese Aufgabe wird durch eine Ventilanordnung mit den Merkmalen des Patentanspruchs 6 gelöst. Vorteilhafte Weiterbildungen der erfindungsgemäßen Ventilanordnung sind in den Unteransprüchen angegeben.

Die erfindungsgemäße Ventilanordnung ist sowohl für die Verwendung in Einrohrdämpfem (Einkammerwirkprinzip) als auch in Zweirohrdämpfern (Zweikammerwirkprinzip) geeignet.

Erfindungsgemäß ist nicht nur das die weiche Dämpfungscharakteristik aufweisende erste Dämpfungsventil, sondern auch das zweite Dämpfungsventil mit der harten Dämpfungscharakteristik in dem Inneren des Gehäuses angeordnet, und das Gehäuse bildet das Element, durch welches der Innenraum des Dämpferrohrs in einen kolbenstangenseitigen und einen kolbenstangenfernen Arbeitsraum unterteilt ist. Dadurch wird ein herkömmlicher, das Dämpferrohr in einen kolbenstangenseitigen und einen kolbenstangenfernen Arbeitsraum unterteilender Dämpfungskolben, der oft auch als "Arbeitskolben" bezeichnet und bei herkömmlichen Stoßdämpfern eingesetzt wird, überflüssig. Die eine harte Dämpfungscharakteristik zur Verfügung stellende Dämpfungsfunktion des herkömmlichen Dämpfungskolbens wird bei der vorliegenden Erfindung durch die Anordnung des zweiten Dämpfungsventils sozusagen in das Gehäuse hinein verlagert. Das zweite Dämpfungsventil kann dadurch von dem Konstrukteur hinsichtlich seiner axialen Bauhöhe minimiert werden, weil es keine Querkräfte mehr übertragen muss. Die Querkräfte werden bei der erfindungsgemäßen Konstruktion durch das am Dämpferrohr anliegende Gehäuse übertragen. Gerade für den Einsatz in McPherson-Federbeinen, die bei Kraftfahrzeugen sehr häufig eingesetzt werden, ist die erfindungsgemäße Lösung daher gut geeignet. Die Dümpfungsventile sind als Federscheibenventile ausgebildet. Erfindungsgemäß sind das erste und das zweite Dämpfungsventil zueinander hydraulisch parallel geschaltet.

Das Gehäuse kann bei der erfindungsgemäßen Konstruktion von dem Konstrukteur hinsichtlich seines Innen- und Außendurchmessers maximiert werden, so dass, insbesondere bei Stoßdämpfern mit einem kleinen Dämpferrohrdurchmesser, ein maximaler Durchmesser zur Unterbringung des Dämpfungsventils mit der weichen Dämpfungscharakteristik zur Verfügung steht. Dadurch wird erreicht, dass auch bei Stoßdämpfern mit einem kleinen Dämpferrohrdurchmesser von z.B. 32 mm ausreichende Spreizung zwischen harter und weicher Dämpfungscharakteristik und zufriedenstellender Fahrkomfort durch weiche Dämpfung bei allen Kolbenstangengeschwindigkeiten erreicht wird. Des Weiteren wird die Lebensdauer der Ventilscheiben deutlich verbessert.

Das erste und das zweite Dämpfungsventil sind vorzugsweise als passive Druckbegrenzungsventile ausgebildet.

Erfindungsgemäß ist das Ventil, durch welches das erste Dämpfungsventil mit der weichen Dämpfungscharakteristik in den Strömungsweg der Dämpfungsflüssigkeit von dem einen in den anderen Arbeitsraum einschaltbar ist, als Schaltventil ausgebildet ist, welches zwischen einer geschlossenen und einer geöffneten Stellung hin und her schaltbar ist. Das Schaltventil kann vorteilhaft als elektromagnetisches oder piezoelektrisches Schaltventil ausgebildet ist.

Nach einer bevorzugten Ausführungsform der Erfindung ist zwischen dem ersten und dem zweiten Dämpfungsventil ein Element mit mindestens einem Rückschlagventil angeordnet. Das Element kann ein Rückschlagventil aufweisen, das von der Dämpfungsflüssigkeit nur bei einer Bewegung der Kolbenstange in eine Richtung durchströmbar ist. Dann ist das Rückschlagventil also entweder nur dann durchströmbar, wenn sich die Kolbenstange in Zugrichtung bewegt, oder es ist nur dann durchströmbar, wenn sich die Kolbenstange in Druckrichtung bewegt. So wird erreicht, dass nur bei einer Bewegung der Kolbenstange in eben dieser Bewegungsrichtung ein zusätzlicher Bypasskanal für die Dämpfungsflüssigkeit zur Verfügung steht. Durch diesen zusätzlichen Bypasskanal wird ein Teilstrom der Dämpfungsflüssigkeit um die Dämpfungsventile mit der weichen und der harten Dämpfungscharakteristik herum geleitet. Dadurch wird erreicht, dass sich bei dieser Bewegungsrichtung der Kolbenstange ein Dämpfungskraftverlauf im Kraft-Geschwindigkeits-Diagramm einstellt, der einen geringeren Anstieg, d.h. einen geringeren Gradienten im Bereich kleiner Kolbenstangengeschwindigkeiten aufweist als der Dämpfungskraftverlauf, der sich für die andere Bewegungsrichtung der Kolbenstange ergibt. Denn bei einer Bewegung der Kolbenstange in die andere Richtung verschließt das Rückschlagventil des Elementes den zusätzlichen Bypasskanal, so dass die gesamte Dämpfungsflüssigkeit durch die Dämpfungsventile mit der weichen und der harten Dämpfungscharakteristik strömen muss.

Durch den von dem Rückschlagventil des Elements zur Verfügung gestellten zusätzlichen Bypasskanal wird auch erreicht, dass sich bei der Bewegungsrichtung der Kolbenstange, in welcher das Rückschlagventil durchströmbar ist, ein Dämpfungskraftverlauf im Kraft-Geschwindigkeits-Diagramm einstellt, der einen geringeren Anstieg, d.h. einen geringeren Gradienten im Bereich kleiner Kolbenstangengeschwindigkeiten aufweist als der Dämpfungskraftverlauf, der sich für dieselbe Bewegungsrichtung der Kolbenstange ergeben würde, wenn das Rückschlagventil am Element nicht vorhanden wäre.

Durch das Element mit dem Rückschlagventil kann also je nach Bewegungsrichtung der Kolbenstange, d.h. getrennt für die Zugstufe und die Druckstufe, gezielt eine gewünschte Steigung der Dämpfungskraftkennlinie im Bereich kleiner Kolbenstangengeschwindigkeiten erreicht werden. Denn in einer Kolbenstangenbewegungsrichtung ist ein zusätzlicher Bypasskanal vorhanden und wirksam, während er in der anderen Kolbenstangenbewegungsrichtung nicht wirksam ist, weil er wegen des geschlossenen Rückschlagventils nicht durchströmbar ist.

Auch im Bereich großer Kolbenstangengeschwindigkeiten bewirkt das Element mit dem Rückschlagventil einen anderen Dämpfungskraftverlauf als er vorliegen würde, wenn das Element kein Rückschlagventil aufweisen würde. Darauf soll im Rahmen der Beschreibung des konkreten Ausführungsbeispiels weiter unten näher eingegangen werden.

Nach einer weiteren Ausführungsform der Erfindung weist das zwischen dem ersten und zweiten Dämpfungsventil angeordnete Element zwei Rückschlagventile auf, von denen das eine bei einer Bewegung der Kolbenstange in die eine Richtung und das andere bei einer Bewegung der Kolbenstange in die andere Richtung von der Dämpfungsflüssigkeit durchströmbar ist, wobei die Rückschlagventile mit Bypasskanälen unterschiedlichen Strömungsquerschnitts zusammenwirken. Bei dieser Ausführungsform können die Dämpfungskraftkennlinienverläufe in der Druckstufe und in der Zugstufe gezielt durch die Dimensionierung der Bypasskanäle in dem Element unabhängig voneinander beeinflusst werden, so dass die Dämpfungskennung des Dämpfers sehr flexibel an Kundenanforderungen angepasst werden kann.

Das Schaltventil ist nach einer Ausführungsform der vorliegenden Erfindung als elektromagnetisches oder piezoelektrisches Schaltventil ausgebildet. Es betätigt einen Ventilkörper, der im geschlossenen Zustand des Schaltventils auf einer Ventilsitzfläche dichtend aufsitzt. Ist das Schaltventil z.B. als elektromagnetisches Schaltventil mit einer Spule und einem Magnetkern ausgebildet, so bildet der Ventilkörper bevorzugt den bewegbaren Magnetanker des Schaltventils. Vorteilhaft weist das die weiche Dämpfungscharakteristik aufweisende erste Dämpfungsventil einen umlaufenden Rand auf, der eine Ventilsitzfläche für den Ventilkörper des Schaltventils bildet. Auf diese Weise ist kein separates Bauteil erforderlich, um für den Ventilkörper eine Ventilsitzfläche zur Verfügung zu stellen, auf der er sich dichtend abstützen kann. Die Ventilsitzfläche ist vielmehr in das Dämpfungsventil mit der weichen Dämpfungscharakteristik integriert. Auch dadurch wird der für die Ventilanordnung benötigte axiale Bauraum verringert bzw. minimiert. Beispielsweise wird dadurch im Vergleich mit der aus DE 35 18 327 A1 bekannten Lösung, bei der ein im Querschnitt H-förmiges Bauteil die Ventilsitzfläche bildet, eine erhebliche Einsparung an axialem Bauraum realisiert.

Im Folgenden wird die Erfindung anhand einer ein Ausführungsbeispiel darstellenden Zeichnung näher erläutert. Im Einzelnen zeigen
- Fig. 1: einen erfindungsgemäßen Stoßdämpfer mit der erfindungsgemäßen Ventilanordnung im axialen Halbschnitt;
- Fig. 2: die erfindungsgemäße Ventilanordnung gemäß Fig. 1 in einem ersten Betriebszustand;
- Fig. 3: die erfindungsgemäße Ventilanordnung gemäß Fig. 1 in einem zweiten Betriebszustand;
- Fig. 4: die erfindungsgemäße Ventilanordnung gemäß Fig. 1 in einem dritten Betriebszustand;
- Fig. 5: ein Dämpfungskraft-Geschwindigkeits-Diagramm mit Dämpfungskennlinien für die Zug- und die Druckstufe eines gemäß Fig. 1 bis 4 ausgeführten Stoßdämpfers;
- Fig. 6: ein Dämpfungskraft-Geschwindigkeits-Diagramm mit Dämpfungskennlinien für die Zug- und die Druckstufe zur Erläuterung des Einflusses des Elements mit Rückschlagventil auf die Dämpfungskennlinien.

Fig. 1 zeigt einen Ausschnitt eines erfindungsgemäßen Stoßdämpfers im axialen Halbschnitt. An der Kolbenstange 2 des Stoßdämpfers ist das Gehäuse 5 befestigt. Das Gehäuse 5 weist an seinem Umfang ein so genanntes Kolbenband 14 auf, welches mit der Innenwand des Dämpferrohrs 1 dichtend zusammen wirkt. Durch das am Gehäuse 5 angeordnete Kolbenband 14 wird der Innenraum des Dämpferrohrs 1 in einen kolbenstangenseitigen 3 und einen kolbenstangenfernen Arbeitsraum 4 unterteilt.

Im Inneren des Gehäuses 5 ist ein erstes Dämpfungsventil 7 und ein zweites Dämpfungsventil 8 angeordnet. Das erste Dämpfungsventil 7 weist eine weiche Dämpfungscharakteristik auf, während das zweite Dämpfungsventil 8 eine harte Dämpfungscharakteristik besitzt. Das von der Kolbenstange 2 abgewandte Ende des Gehäuses 5 ist offen. Zwischen dem zweiten Dämpfungsventil 8 und dem ersten Dämpfungsventil 7 ist ein Element 9 angeordnet. Das zweite Dämpfungsventil 8 und das Element 9 weisen jeweils einen Zentralkanal 20 auf. Das Element 9 weist ein Rückschlagventil 10 auf. Das Rückschlagventil 10 ist im dargestellten Ausführungsbeispiel als ausschließlich in der Druckstufe des Stoßdämpfers wirksames Rückschlagventil ausgebildet. Dies bedeutet, dass das Rückschlagventil sich nur bei einer Bewegung der Kolbenstange 2 in Druckrichtung (d.h. heißt in Fig. 1 nach unten) öffnet. Bei einer Bewegung der Kolbenstange 2 in Zugrichtung (d.h. in Fig. 1 nach oben) bleibt das Rückschlagventil 10 geschlossen.

In gleicher Weise wäre es im Rahmen der vorliegenden Erfindung möglich, das Rückschlagventil 10 als ausschließlich in der Zugstufe wirksames Rückschlagventil auszubilden. Im konkreten Ausführungsbeispiel wird vorliegend jedoch von einem ausschließlich in der Druckstufe durchströmbaren Rückschlagventil ausgegangen, da dies den am häufigsten auftretenden Anwendungsfall darstellt. Wie bereits vorstehend erwähnt können auch zwei Rückschlagventile 10 an dem Element 9 anzuordnen, wobei eines in Zugrichtung und eines in Druckrichtung durchströmbar ist. Jedes Rückschlagventil wirkt mit einem ihm zugeordneten Bypasskanal 35 zusammen. Die beiden Bypasskanäle sind dann sinnvoller Weise unterschiedlich dimensioniert, um in Zugstufe und Druckstufe eine unterschiedliche Beeinflussung der Dämpfungskennlinien zu erreichen.

Ferner umfasst die in dem Gehäuse 5 angeordnete Ventilanordnung ein Schaltventil 6. Das Schaltventil 6 ist im dargestellten Ausführungsbeispiel als elektromagnetisches Schaltventil ausgebildet. Es umfasst eine elektromagnetische Spule 21, einen Magnetkern 22 und einen Magnetanker 23. Der Magnetanker 23 wird im dargestellten Ausführungsbeispiel durch den Ventilkörper 11 gebildet. Zwischen dem Magnetkern 22 und dem Ventilkörper 11 ist eine Schraubendruckfeder 24 angeordnet. Die Schraubendruckfeder 24 wirkt als Rückstellfeder, gegen deren Druckkraft der Ventilkörper 11 durch die Magnetkraft des Elektromagneten angehoben werden kann. Wird das elektromagnetische Schaltventil 6 nicht bestromt, so drückt die Schraubendruckfeder 24 den Ventilkörper 11 in seinen geschlossenen Zustand, so dass der Ventilkörper 11 auf der Ventilsitzfläche 13 dichtend aufsitzt. Auf diese Weise ist die sogenannte Fail-safe-Funktion sichergestellt, das heißt bei plötzlichem Stromausfall befindet sich das Schaltventil im geschlossenen Zustand, so dass das die weiche Dämpfungscharakteristik aufweisende erste Dämpfungsventil 7 nicht von der Dämpfungsflüssigkeit durchströmt wird und nur das die harte Dämpfungskerinung aufweisende zweite Dämpfungsventil 8 die Dämpfungskennung bewirkt.

Die Arbeitsweise der erfindungsgemäßen Ventilanordnung soll im Folgenden an Hand von drei ausgesuchten Betriebszuständen näher beschrieben werden.

In Fig. 2 ist ein erster Betriebszustand der erfindungsgemäßen Ventilanordnung dargestellt. Um eine größere Klarheit und eine bessere Verständlichkeit zu erreichen ist die erfindungsgemäße Ventilanordnung in einer vergrößerten Darstellung dargestellt und die Kolbenstange sowie das Dämpferrohr des Stoßdämpfers sind weggelassen worden.

Bei dem in Fig. 2 dargestellten Betriebszustand ist das Schaltventil 6 geschlossen. Die Schraubendruckfeder 24 hat den Ventilkörper 11 auf die Ventilsitzfläche 13 gedrückt, so dass der Ventilkörper 11 dichtend auf der Ventilsitzfläche 13 aufsitzt. Bei dieser Schaltstellung des Ventilkörpers 11 ist das die weiche Dämpfungscharakteristik aufweisende erste Dämpfungsventil 7 von der Dämpfungsflüssigkeit nicht durchströmbar.

Wie durch die gestrichelten und durchgezogenen Linien und Pfeile angedeutet ist bei geschlossenem Schaltventil 6 nur das die harte Dämpfungscharakteristik aufweisende zweite Dämpfungsventil 8 von der Dämpfungsflüssigkeit durchströmbar. In Fig. 2 sind mit den gestrichelten Linien die Strömungspfade gekennzeichnet, die die Strömung der Dämpfungsflüssigkeit bei einer Bewegung des Gehäuses 5 in Zugrichtung (d.h. in den Fig. nach oben) beschreiben. Die mit den durchgezogenen Linien dargestellten Strömungspfade sind diejenigen Strömungspfade, welchen die Dämpfungsflüssigkeit bei einer Bewegung des Gehäuses 5 in Druckrichtung (d.h. in den Fig. nach unten) folgt. Nur im Falle der Bewegung des Gehäuses 5 in Druckrichtung ist zusätzlich zu dem zweiten Dämpfungsventil 8 auch das am Element 9 angeordnete Rückschlagventil 10 durchströmbar.

Bewegt sich das in Fig. 2 dargestellte Gehäuse in Zugrichtung (d.h. in Fig. 2 nach oben), so strömt der Hauptteil der Dämpfungsflüssigkeit (angedeutet durch die dickere gestrichelte Linie) durch das an dem zweiten Dämpfungsventil angeordnete passive Druckbegrenzungsventil 30. Ein kleinerer Anteil der Dämpfungsflüssigkeit strömt parallel dazu durch einen im zweiten Dämpfungsventil 8 ausgebildeten permanenten Bypass 31. Bei geschlossenem Schaltventil 6 und einer Bewegung des Gehäuses 5 in Zugrichtung wird somit die Dämpfkraft des Stoßdämpfers durch das Druckbegrenzungsventil 30 und den permanenten Bypass 31 des zweiten Dämpfungsventils 8 bestimmt.

Bei einer Bewegung des Gehäuses 5 in Druckrichtung (d.h. in Fig. 2 nach unten) durchströmt die Dämpfungsflüssigkeit das in Druckrichtung wirksame Druckbegrenzungsventil 33 (angedeutet durch die dickere durchgezogene Linie) sowie, mit einem kleineren Anteil, den permanenten Bypass 31. Zusätzlich steht der Dämpfungsflüssigkeit bei dieser Bewegungsrichtung des Gehäuses in Druckrichtung ein weiterer Bypasskanal 35 zur Verfügung, der durch das Rückschlagventil 10 am Element 9 gebildet wird. Bei einer Bewegung des Gehäuses 5 in Druckrichtung teilt sich der Volumenstrom der Dämpfungsflüssigkeit somit nicht nur in zwei, sondern insgesamt in drei Strömungspfade auf. Dadurch wird in der Druckstufe ein anderer Dämpfungskraftverlauf erreicht als in der Zugstufe. Die Anströmung des Rückschlagventils 10 erfolgt über die zentralen Kanäle 20, die in dem zweiten Dämpfungsventil 8 und dem Element 9 vorgesehen sind.

Auf dem Umfang des Gehäuses 5 verteilt sind Öffnungen 40 angeordnet, über welche die Dämpfungsflüssigkeit in das Gehäuse 5 hineinströmen kann (Zugstufe) bzw. aus dem Gehäuse hinausströmen kann (Zug-Druckstufe).

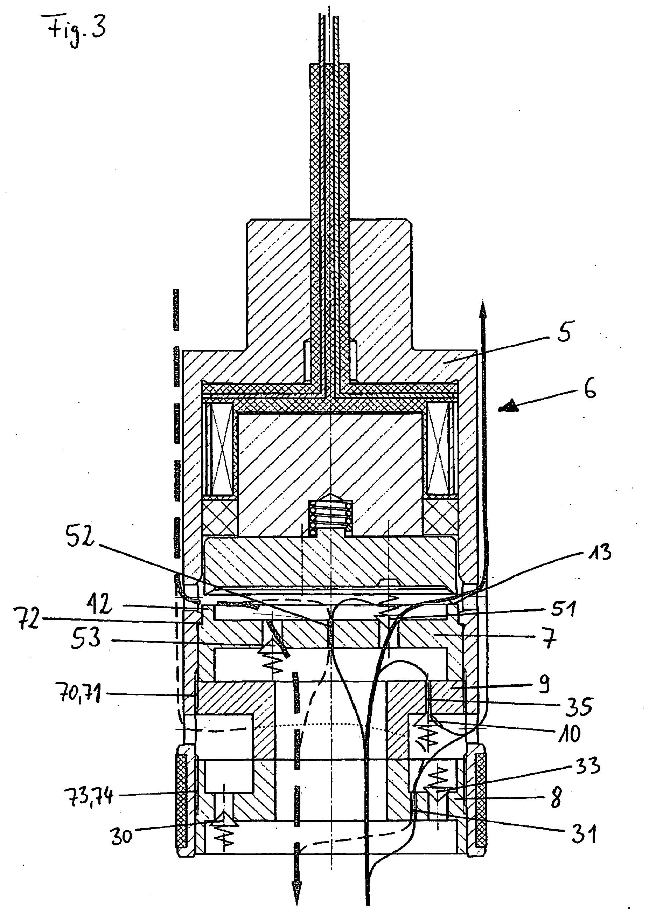

In Fig. 3 ist ein zweiter Betriebszustand des erfindungsgemäßen Stoßdämpfers dargestellt. Dieser Betriebszustand ist durch ein geöffnetes Schaltventil 6 und kleine Kolbenstangengeschwindigkeiten gekennzeichnet. Dies bedeutet, dass die in Fig. 3 mit gestrichelten und durchgezogenen Linien dargestellten Strömungen der Dämpfungsflüssigkeit sich nur bei relativ geringen Bewegungsgeschwindigkeiten des Gehäuses 5 einstellen.

Analog zu Fig. 2 sind die Strömungswege der Dämpfungsflüssigkeit bei einer Bewegung des Gehäuses 5 in Zugrichtung (d. h. in Fig. 3 nach oben) durch gestrichelte Linien dargestellt. Die durchgezogenen Linien kennzeichnen die Strömungspfade der Dämpfungsflüssigkeit bei einer Bewegung des Gehäuses 5 in Druckrichtung (d.h. in Fig. 3 nach unten).

Bewegt sich das Gehäuse 5 in Zugrichtung und ist das Schaltventil 6 geöffnet, wie in Fig. 3 dargestellt, so durchströmt ein Hauptanteil der Dämpfungsflüssigkeit das Druckbegrenzungsventil 53 des ersten Dämpfungsventils 7. Ein kleinerer Anteil der Dämpfungsflüssigkeit durchströmt die in dem ersten Dämpfungsventil 7 ebenfalls vorgesehene permanent geöffnete Bypassöffnung 52. Ein dritter Anteil des Volumenstroms der Dämpfungsflüssigkeit durchströmt den permanent geöffneten Bypasskanal 31 in dem zweiten Dämpfungsventil 8. Der Volumenstrom der Dämpfungsflüssigkeit teilt sich somit in drei Teilvolumenströme auf.

Das die harte Dämpfungskennung aufweisende zweite Dämpfungsventil 8 bleibt verschlossen, weil bei den geringen Kolbenstangengeschwindigkeiten der Öffnungsdruck des Druckbegrenzungsventils 30 nicht überschritten wird.

Bei einer Bewegung des Gehäuses 5 in Druckrichtung teilt sich der Volumenstrom der Dämpfungsflüssigkeit dagegen in insgesamt vier Teilvolumenströme auf. Der größte Teilvolumenstrom durchströmt das Druckbegrenzungsventil 51, welches am ersten Dämpfungsventil 7 angeordnet ist. Ein kleinerer Teilvolumenstrom durchströmt den permanent geöffneten Bypasskanal 52 des ersten Dämpfungsventils 7. Ein weiterer Teilvolumenstrom durchströmt den permanent geöffneten Bypasskanal 31, der in dem zweiten Dämpfungsventil 8 angeordnet ist. Ein vierter Teilvolumenstrom durchströmt das an dem Element 9 angeordneten Rückschlagventil 10, welches ausschließlich bei einer Bewegung des Gehäuses 5 in Druckrichtung öffnet. Der Dämpfungsflüssigkeit steht somit bei einer Bewegung des Gehäuses 5 in Druckrichtung wegen des zusätzlichen Bypasskanals in dem Element 9 eine größere Durchströmungsfläche zur Verfügung als bei einer Bewegung des Gehäuses 5 in Zugrichtung. Daher kann für die Druckstufe des erfindungsgemäßen Stoßdämpfers ein anderer Dämpfungskennlinienverlauf erzielt werden als für die Zugstufe. Konkret wird in der Druckstufe eine geringere Dämpfkraft erzielt als bei gleicher Gehäusegeschwindigkeit in der Zugstufe.

Bei dem in Fig. 3 dargestellten Betriebszustand gilt auch für die Druckstufe, dass das die harte Dämpfungskennung aufweisende zweite Dämpfungsventil 8 wegen der geringen Kolbenstangengeschwindigkeiten verschlossen bleibt, so dass nur das die weiche Dämpfungskennung aufweisende erste Dämpfungsventil 7 zusammen mit den vorstehend beschriebenen Bypasskanälen die Dämpfungskennung bestimmen.

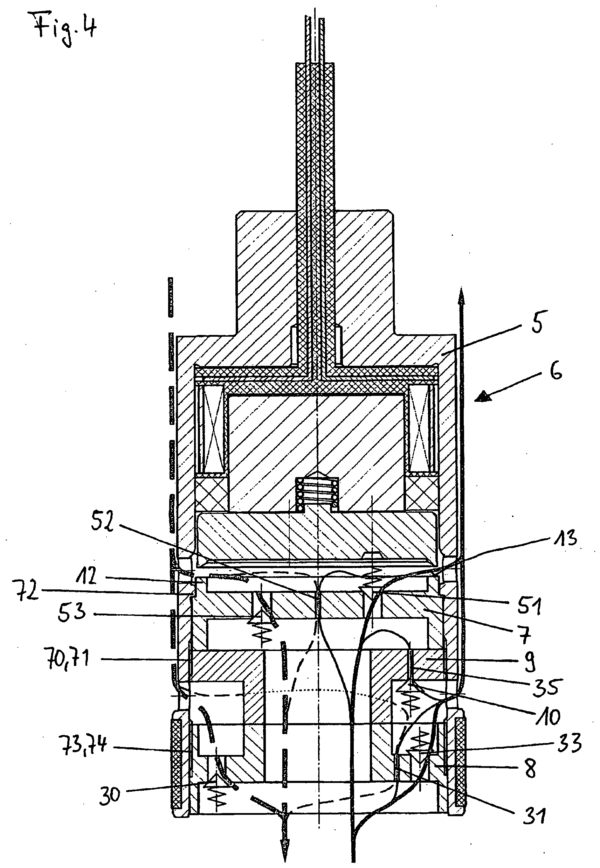

In Fig. 4 ist ein dritter Betriebszustand des erfindungsgemäßen Stoßdämpfers dargestellt. Ebenso wie bei dem in Fig. 3 dargestellten zweiten Betriebszustand ist das Schaltventil 6 geöffnet. Im Unterschied zu dem zweiten Betriebszustand sind jedoch bei dem in Fig. 4 dargestellten dritten Betriebszustand die Strömungsverhältnisse dargestellt, die sich bei relativ großen Kolbenstangengeschwindigkeiten einstellen.

Die gestrichelten Linien kennzeichnen wieder die Strömungsverhältnisse bei einer Bewegung des Gehäuses 5 in Zugrichtung, d.h. in Fig. 4 nach oben.

Es ist gut zu erkennen, dass die Dämpfungsventile 7 und 8 hydraulisch parallel zueinander angeordnet sind.

Im dritten Betriebszustand gemäß Fig. 4 teilt sich der Volumenstrom der Dämpfungsflüssigkeit bei einer Bewegung des Gehäuses 5 in Zugrichtung in insgesamt vier Teilvolumenströme auf. Ein erster Teilvolumenstrom durchströmt das Druckbegrenzungsventil 53, das am ersten Dämpfungsventil 7 mit der weichen Dämpfungscharakteristik ausgebildet ist. Ein zweiter größerer Teilvolumenstrom durchströmt das Druckbegrenzungsventil 30, das am zweiten Dämpfungsventil 8 mit der harten Dämpfungscharakteristik ausgebildet ist. Aufgrund der großen Kolbenstangengeschwindigkeit wird nämlich der Öffnungsdruck des Druckbegrenzungsventils 30 überschritten, so dass im Vergleich zu dem Betriebszustand 2 gemäß Fig. 3 dieser zusätzliche Teilvolumenstrom durch das zweite Dämpfungsventil 8 auftritt. Die übrigen beiden kleineren Teilvolumenströme entsprechen den bereits vorstehend zum zweiten Betriebszustand gemäß Fig. 3 beschriebenen Teilvolumenströmen durch die Bypasskanäle 31 und 52.

Bei einer Bewegung des Gehäuses 5 in Druckrichtung, d. h. in Fig. 4 nach unten, teilt sich der Volumenstrom der Dämpfungsflüssigkeit in insgesamt fünf unterschiedliche Teilvolumenströme auf. Ein erster Teilvolumenstrom durchströmt das Druckbegrenzungsventil 51, das am ersten Dämpfungsventil 7 angeordnet ist. Ein zweiter größerer Teilvolumenstrom durchströmt das Druckbegrenzungsventil 33, das am zweiten Dämpfungsventil 8 angeordnet ist, denn aufgrund der beim dritten Betriebszustand gemäß Fig. 4 vorliegenden größeren Kolbenstangengeschwindigkeiten wird der Öffnungsdruck des Druckbegrenzungsventils 33 überschritten. Die übrigen drei kleineren Teilvolumenströme entsprechen den Teilvolumenströmen, die bereits vorstehend zum Betriebszustand 2 gemäß Fig. 3 beschrieben worden sind (Bypasskanäle 31, 35, 52).

Festzuhalten ist somit, dass auch beim Betriebszustand 3 bei einer Bewegungsrichtung des Gehäuses 5 in Druckrichtung für die Dämpfungsflüssigkeit aufgrund des in dem Element 9 angeordneten Rückschlagventils 10 eine größere Durchströmungsfläche zur Verfügung steht, als bei einer Bewegung des Gehäuses 5 in Zugrichtung. Daher wird wiederum in der Druckstufe ein anderer Dämpfungskraftverlauf erreicht als in der Zugstufe.

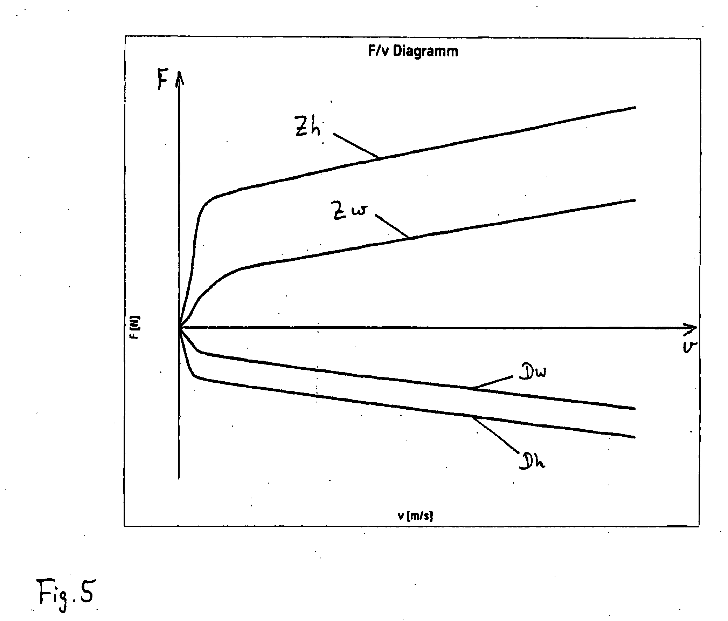

In Fig. 5 sind beispielhaft vier verschiedene Dämpfungskennlinien in einem Dämpfungskraft-Kolbenstangengeschwindigkeits-Diagramm (F-v-Diagramm) dargestellt, die sich mit einem gemäß den Fig. 1 bis 4 ausgebildeten Stoßdämpfer einstellen lassen. Mit dem Bezugszeichen Zh ist die die harte Dämpfungskennung beschreibende Kennlinie in der Zugstufe bezeichnet. Das Bezugszeichen Dh bezeichnet die die harte Dämpfungskennung beschreibende Kennlinie in der Druckstufe. Mit Zw bzw. Dw ist die weiche Dämpfungskennung in der Zugstufe bzw. der Druckstufe bezeichnet. Es ist gut zu erkennen, dass auch bei hohen Kolbenstangengeschwindigkeiten noch eine einen guten Fahrkomfort gewährleistende weiche Dämpfungskennung erreicht wird. Auch weist der Kennlinienverlauf nach Fig. 5 eine erwünschte deutliche Spreizung zwischen der harten und weichen Dämpfungscharakteristik auf. Die Erfindung bietet den Vorteil, dass auf einfache Weise z.B. durch Anpassung der Durchmesser der Bypasskanäle 31, 35 und 52 die Kennlinienverläufe an Kundenwünsche angepasst werden können. Auch kleine Stoßdämpfer mit geringen Dämpferrohrdurchmessem können so mit variablen Dämpfungscharakteristiken flexibel ausgelegt werden.

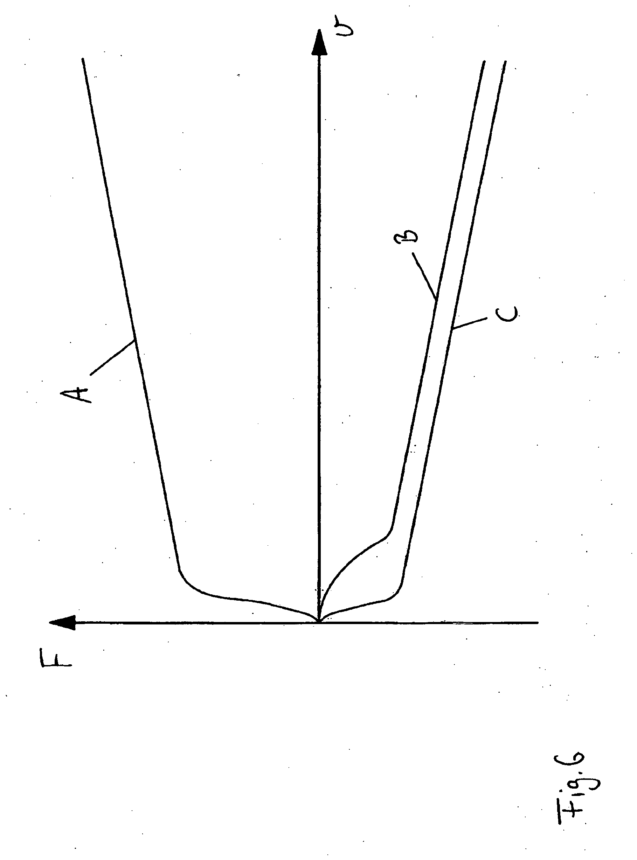

Fig. 6 zeigt in einem F-v-Diagramm den Einfluss des Elements 9 mit dem Rückschlagventil 10 gemäß Fig. 1 bis 4 auf die Dämpfungskennlinien für die Zugstufe und die Druckstufe. Die Dämpfungskraftkennlinie für die Zugstufe ist durch die Kennlinie A beschrieben. Die Dämpfungskennlinie für die Druckstufe des erfindungsgemäßen Stoßdämpfers ist durch die Kennlinie B beschrieben. Es ist gut zu erkennen, dass im Bereich kleinerer Kolbenstangengeschwindigkeiten die Druckstufenkennlinie eine ganz andere (geringere) Steigung und einen ganz anderen Verlauf aufweist als die Zugstufenkennlinie A. Dies entspricht einer häufig von Fahrzeugherstellern gewünschten asymmetrischen Kennlinienanordnung in der Zugstufe und in der Druckstufe.

Die mit dem Buchstaben C gekennzeichnete Dämpfungskennlinie ist eine Dämpfungskraftkennlinie, die sich einstellen würde, wenn das Element 9 kein Rückschlagventil besäße und somit kein in der Druckstufe wirksamer zusätzlicher Bypassquerschnitt 35 vorhanden wäre. Es ist gut zu erkennen, dass in diesem Fall im Bereich kleiner Kolbenstangengeschwindigkeiten die Steigung der Dämpfungskraftkennlinie C dieselbe ist wie die der Zugstufenkennlinie A.

Ein Vergleich der beiden Kennlinienverläufe B und C zeigt, dass durch das zur Verfügung stellen eines zusätzlichen Bypassquerschnittes 35 durch das Rückschlagventil 10 am Element 9 bei gegebenen Kolbenstangengeschwindigkeiten geringere Dämpfungskräfte erzielt werden als dies der Fall wäre, wenn das Element 9 kein Rückschlagventil aufweisen würde.

Die Darstellung gemäß Fig. 6 zeigt sehr anschaulich, wie sich durch das zusätzliche durchströmbare Rückschlagventil 10, das am Element 9 ausgebildet ist, sehr gut und auf einfache und kostengünstige Weise eine unterschiedliche Dämpfungskennung in der Zugstufe und der Druckstufe erreichen lässt. Durch die erfindungsgemäße Ventilanordnung kann der Stoßdämpfer somit sehr gut an unterschiedliche Kundenanforderungen angepasst werden.

Bei der erfindungsgemäßen Dämpfungsventilanordnung ist durch mehrere unterschiedliche Maßnahmen der von der Ventilanordnung benötigte axiale Bauraum minimiert.

Einerseits ist der axiale Bauraum der erfindungsgemäßen Ventilanordnung dadurch minimiert, dass das die harte Dämpfungskennung aufweisende Dämpfungsventil 8 in den Innenraum des Gehäuses 5 integriert worden ist und gleichzeitig das Gehäuse 5 hinsichtlich seines Durchmessers so ausgelegt worden ist, dass mit dem am Gehäuse 5 angeordneten Kolbenband 14 die Aufteilung des Dämpferrohrinnenraums in einen kolbenstangenseitigen Arbeitsraum 3 und einen kolbenstangenfernen Arbeitsraum 4 erfolgt. Auf diese Weise können insbesondere bei McPherson-Federbeinen die erforderlichen Kraftübertragungen von der Kolbenstange 2 auf das Dämpferrohr 1 über das Gehäuse 5 erfolgen. Diese Funktion wird bei herkömmlichen Stoßdämpfern üblicherweise von dem Arbeitskolben übernommen, der für diesen Zweck eine bestimmte Mindestbauhöhe nicht unterschreiten darf. Bei den herkömmlichen Stoßdämpfern weist der Arbeitskolben dann üblicherweise auch die harte Dämpfungskennung auf. Somit kann bei den herkömmlichen Stoßdämpfern die axiale Bauhöhe des Dämpfungselementes, das für die harte Dämpfungskennung zuständig ist (nämlich der Arbeitskolben), nicht unter ein bestimmtes Maß verringert werden. Bei der erfindungsgemäßen Ventilanordnung dagegen kann das für die harte Dämpfungskennung zuständige zweite Dämpfungsventil 8 hinsichtlich seiner axialen Bauhöhe minimiert werden, weil es für die Kraftübertragung von der Kolbenstange auf das Dämpferrohr nicht zur Verfügung stehen muss. Diese Kraftübertragung erfolgt wie gesagt ausschließlich über das Gehäuse 5.

Zum anderen ist eine Einsparung von axialem Bauraum bei der erfindungsgemäßen Ventilanordnung dadurch erreicht worden, dass die Ventilsitzfläche 13, auf der sich der Ventilkörper 11 im geschlossenen Zustand dichtend abstützt, nicht durch ein separates Bauteil gebildet wird, sondern in das erste Dämpfungsventil 7 integriert ist. Hierzu weist das erste Dämpfungsventil 7 einen umlaufenden Rand 12 auf, dessen Stirnfläche die Ventilsitzfläche 13 für den Ventilkörper 11 bildet. Es ist somit kein mit dem Gehäuse 5 verbundenes separates Bauteil oder ein radialer Vorsprung des Gehäuses 5 erforderlich, um eine Ventilsitzfläche für den Ventilkörper 11 zur Verfügung zu stellen. Auch dadurch wird axialer Bauraum eingespart. Insbesondere im Vergleich zu der eingangs zitierten Lösung gemäß DE 35 18 327 A1 wird eine erhebliche axiale Bauraumeinsparung realisiert, denn das aus der DE 35 18 327 A1 bekannte, im Querschnitt H-förmige Bauteil beansprucht einen erheblichen axialen Bauraum. Die erfindungsgemäße Ventilanordnung baut dagegen in axialer Richtung sehr kompakt.

Bei der erfindungsgemäßen Ventilanordnung ist das Element 9 mit dem Gehäuse 5 fest verbunden. Auf diese Weise wird das erste Dämpfungsventil 7 zwischen dem Element 9 und einem radialen Vorsprung 72 des Gehäuses 5 fest eingespannt.

Durch das erfindungsgemäße Dämpfungselement kann ein herkömmlicher Stoßdämpfer, der einen an der Kolbenstange befestigten herkömmlichen Dämpfungskolben aufweist, auf einfache Weise in einen Stoßdämpfer verwandelt werden, der zwischen zwei unterschiedlichen Dämpfungskennungen (harte Dämpfung/weiche Dämpfung) hin und her geschaltet werden kann. Hierzu ist es nur erforderlich, den herkömmlichen Dämpfungskolben von der Kolbenstange abzubauen und das Gehäuse 5 der erfindungsgemäßen Ventilanordnung an der Kolbenstange zu befestigen. Die erforderliche Stromzuführung für die Betätigung des elektromagnetischen Schaltventils 6 erfolgt durch Verwendung einer hohlen Kolbenstange, durch deren Hohlraum die erforderlichen Kabel geführt werden.

Die erfindungsgemäße Ventilanordnung gestattet es, das Gehäuse 5 mit einem im Verhältnis zum Dämpferrohrinnendurchmesser maximierten inneren Durchmesser auszubilden, so dass die Dämpfungsventile 7 und 8 einen maximalen Durchmesser aufweisen können. Dies ist insbesondere wichtig für die Auslegung des die weiche Dämpfungscharakteristik aufweisenden ersten Dämpfungsventils 7. Um bei allen Kolbenstangengeschwindigkeiten eine den Fahrkomfort erhöhende Dämpfungswirkung zu erreichen und die Spreizung zwischen der harten und weichen Dämpfungscharakteristik zu maximieren muss insbesondere bei Stoßdämpfern mit geringen Dämpferrohrdurchmessern ein maximaler Durchmesser für das Dämpfungsventil mit der weichen Dämpfungskennung zur Verfügung gestellt werden. Dies wird bei der erfindungsgemäßen Ventilanordnung in vorbildlicher Weise erreicht.

### Bezugszeichenliste

1. Dämpferrohr
2. Kolbenstange
3. Kolbenstangenseitiger Arbeitsraum
4. Kolbenstangenferner Arbeitsraum
5. Gehäuse
6. Schaltventil
7. erstes Dämpfungsventil
8. zweites Dämpfungsventil
9. Element
10. Rückschlagventil
11. Ventilkörper
12. Rand
13. Ventilsitzfläche
14. Kolbenband
20. Zentralkanal
21. Spule
22. Magnetkern
23. Magnetanker
24. Schraubendruckfeder
30. Druckbegrenzungsventil
31.Bypass
33. Druckbegrenzungsventil
35. Bypasskanal
40. Öffnung
51. Druckbegrenzungsventil
52. Bypassöffnung
53. Druckbegrenzungsventil
70. Außengewinde
71. Innengewinde
72. Vorsprung
73. Außengewinde
74. Innengewinde
A Kennlinie, Zugstufenkennlinie
B Kennlinie, Druckstufenkennlinie
C Kennlinie

## Patentansprüche

1. Stoßdämpfer für eine Radaufhängung eines Kraftfahrzeugs, umfassend:
a) ein mit einer Dämpfungsflüssigkeit zumindest teilweise gefülltes Dämpferrohr (1),
b) eine in dem Dämpferrohr (1) hin- und herbewegbar angeordnete Kolbenstange (2),
c) ein in dem Dämpferrohr (1) geführtes Element, durch welches der Innenraum des Dämpferrohrs (1) in einen kolbenstangenseitigen Arbeitsraum (3) und einen kolbenstangenfernen Arbeitsraum (4) unterteilt ist,
d) ein mit der Kolbenstange (2) verbundenes Gehäuse (5),
e) ein in dem Gehäuse (5) angeordnetes, zwischen einer geschlossenen und geöffneten Stellung hin- und herschaltbares Schaltventil (6), wobei der kolbenstangenseitige Arbeitsraum (3) und der kolbenstangeferne Arbeitsraum (4) über das Gehäuse (5) hydraulisch miteinander verbunden sind und in dem Gehäuse (5) ein von der Dämpfungsflüssigkeit in beiden Durchströmungsrichtungen durchströmbares erstes Dämpfungsventil (7) vorgesehen ist, welches mittels des Schaltventils (6) in den Strömungsweg der Dämpfungsflüssigkeit von dem einen in den anderen Arbeitsraum einschaltbar ist,
f) ein zweites Dämpfungsventil (8), welches von der Dämpfungsflüssigkeit in beiden Durchströmungsrichtungen durchströmbar ist,
wobei das erste Dämpfungsventil (7) und das zweite Dämpfungsventil (8) als Federscheibenventile ausgebildet sind und zueinander hydraulisch parallel geschaltet sind, wobei das erste Dämpfungsventil (7) eine weiche Dämpfungscharakteristik aufweist und wobei das zweite Dämpfungselement (8) eine harte Dämpfungscharakteristik besitzt, **dadurch gekennzeichnet, dass das Gehäuse (5) einteilig ausgebildet ist, dass** das zweite Dämpfungsventil (8) in dem Innern des Gehäuses (5) angeordnet ist und dass das Gehäuse (5) das Element bildet, durch welches der Innenraum des Dämpferraums (1) in einen kolbenstangenseitigen Arbeitsraum (3) und einen kolbenstangenfernen Arbeitsraum (4) unterteilt ist.

2. Stoßdämpfer nach Anspruch 1, **dadurch gekennzeichnet, dass** das Schaltventil (6) als elektromagnetisch oder piezoelektrisches Schaltventil ausgebildet ist, das einen Ventilkörper (11) betätigt, wobei das erste Dämpfungsventil (7) einen umlaufenden Rand (12) aufweist, der eine Ventilsitzfläche (13) für den Ventilkörper (11) bildet.

3. Stoßdämpfer nach Anspruch 1 oder 2, **dadurch gekennzeichnet, dass** zwischen dem ersten Dämpfungsventil (7) und dem zweiten Dämpfungsventil (8) ein Element (9) mit mindestens einem Rückschlagventil (10) angeordnet ist.

4. Stoßdämpfer nach Anspruch 3, **dadurch gekennzeichnet, dass** das Element (9) ein Rückschlagventil (10) aufweist, das nur bei einer Bewegung der Kolbenstange (2) in eine Richtung von der Dämpfungsflüssigkeit durchströmbar ist.

5. Stoßdämpfer nach Anspruch 3, **dadurch gekennzeichnet, dass** das Element (9) zwei Rückschlagventile (10) aufweist, von denen das eine bei einer Bewegung der Kolbenstange (2) in die eine Richtung und das andere bei einer Bewegung der Kolbenstange (2) in die andere Richtung von der Dämpfungsflüssigkeit durchströmbar ist, wobei die Rückschlagventile (10) mit Bypasskanälen unterschiedlichen Strömungsquerschnitt zusammenwirken.

## Claims

1. A shock absorber for a wheel suspension of a motor vehicle, comprising:
a) a damper tube (1) at least partially filled with a damping fluid,
b) a piston rod (2) arranged so as to be movable back and forth in the damper tube (1),
c) an element guided in the damper tube (1), by which the interior of the damper tube (1) is divided into a working chamber (3) on the piston rod side and a working chamber (4) remote from the piston rod,
d) a housing (5) connected with the piston rod (2),
e) a control valve (6) arranged in the housing (5), which can be switched back and forth between a closed and an open position, wherein the working chamber (3) on the piston rod side and the working chamber (4) remote from the piston rod are connected with one another hydraulically via the housing (5), and in the housing (5) a first damping valve (7) is provided, able to be flowed through by the damping fluid in both through-flow directions, which damping valve is able to be engaged into the flow path of the damping fluid from one into the other working chamber by means of the control valve (6),
f) a second damping valve (8), which is able to be flowed through by the damping fluid in both through-flow directions,
wherein the first damping valve (7) and the second damping valve (8) are constructed as spring disc valves and are connected hydraulically in parallel with respect to one another, wherein the first damping valve (7) has a soft damping characteristic and
wherein the second damping element (8) has a hard damping characteristic, **characterized in that** the housing (5) is one-piece, that the second damping valve (8) is arranged in the interior of the housing (5) and that the housing (5) forms the element by which the interior of the damper chamber (1) is divided into a working chamber (3) on the piston rod side and a working chamber (4) remote from the piston rod.

2. The shock absorber according to Claim 1, **characterized in that** the control valve (6) is embodied as an electromagnetic or piezoelectric control valve which activates a valve body (11), wherein the first damping valve (7) has a peripheral edge (12) which forms a valve seat surface (13) for the valve body (11).

3. The shock absorber according to Claim 1 or 2, **characterized in that** between the first damping valve (7) and the second damping valve (8) and element with at least one check valve (10) is arranged.

4. The shock absorber according to Claim 3, **characterized in that** the element (9) has a check valve (10) which is only able to be flowed through by the damping fluid on a movement of the piston rod (2) in one direction.

5. The shock absorber according to Claim 3, **characterized in that** the element (9) has two check valves (10), one of which is able to be flowed through by the damping fluid on a movement of the piston rod (2) in one direction, and the other on a movement of the piston rod (2) in the other direction, wherein the check valves (10) cooperate with bypass ducts of different flow cross-section.

## Revendications

1. Pare-chocs pour une suspension de roue d'un véhicule automobile, comprenant:
a) un tuyau d'amortisseur (1) rempli au moins partiellement avec un liquide d'amortissement,
b) une tige de piston (2) déplaçable d'avant en arrière dans le tuyau d'amortisseur,
c) un élément guidé dans le tuyau d'amortisseur (1), par l'intermediaire duquel l'espace intérieur du tuyau d'amortisseur (1) est divisé en une chambre de travail (3) du côté de la tige de piston et une chambre de travail (4) éloigne de la tige de piston,
d) un logement (5) relié à la tige de piston (2),
e) une soupape de commutation (6) disposée dans le logement (5), commutable entre une position ouverte et une position fermée, dans lequel la chambre de travail (3) du côté de la tige de piston et la chambre de travail (4) éloignée de la tige de piston sont reliées l'une à l'autre hydrauliquement par l'intermédiaire du logement (5) et dans le logement (5) une première soupape d'amortissement (7) traversée par le liquide d'amortissement dans les deux directions d'écoulement est prévue, qui qui put être mise en service au moyen de la soupape de commutation (6) dans le trajet d'écoulement du liquide d'amortissement d'une chambre de travail à l'autre chambre de travail,
f) une deuxième soupape d'amortissement (8), qui peut être traversée par le liquide d'amortissement dans les deux directions d'écoulement, dans lequel la premierès soupape d'amortissement (7) et la deuxième soupape d'amortissement (8) sont conçues comme des soupapes à rondelle élastique et sont branchées hydrauliquement parallèlement l'une à l'autre, dans lequel la première soupape d'amortissement (7) présente une caractéristique d'amortissement molle et dans lequel le deuxième élément d'amortissement (8) possède une caractéristique d'amortissement dure, **caractérisé en ce que** le logement (5) est une pièce, **en ce que** la deuxième soupape d'amortissement (8) est disposée à l'intérieur du logement (5) et **en ce que** le logement (5) forme l'élément, par l'intermédiaire duquel l'espace interne de la chambre d'amortisseur (1) est divisé en une chamber de travail (3) du côté de la tige de piston et une chambre de travail (4) éloignée de la tige de piston.

2. Pare-chocs selon la revendication 1, **caractérisé en ce que** la soupape de commutation (6) est conçue comme une soupape de commutation électromagnétique ou piézoélectrique, qui actionner un corps de soupape (11), dans lequel la première soupape d'amortissement (7) présente un bord circonférentiel (12), qui forme une surface de soupape (13) pour le corps de soupape (11).

3. Pare-chocs selon la revendication 1 ou 2, **caractérisé en ce que** entre la première soupape d'amortissement (7) et la deuxième soupape d'amortissement (8) un élément (9) est disposé avec au moins un clapet anti-retour (10).

4. Pare-chocs selon la revendication 3, **caractérisé en ce que** l'élément (9) présente un clapet anti-retour (10), qui peut être traversé par le liquide d'amortissement seulement lors d'un mouvement de la tige de piston (2) dans une direction.

5. Pare-chocs selon la revendication 3, **caractérisé en ce que** l'élément (9) présente deux clapets anti-retour (10), desquels un peut être traversé par le liquid d'amortissement lors d'un mouvement de la tige de piston (2) dans une direction et l'autre peut être traversé par le liquide d'amortissement lors d'un mouvement de la tige de piston (2) dans l'autre direction, dans lequel les clapets anti-retour (10) coopèrent avec des canaux de dérivation ayant des sections transversales d'écoulement différentes.
